# EUROPÄISCHE PATENTANMELDUNG

(11) **EP 4 477 507 A1**
(43) Veröffentlichungstag der Anmeldung: **18.12.2024**
(21) Anmeldenummer: 24180386.5
(22) Anmeldetag: 06.06.2024
(51) Int. Cl.: B62D 53/10, B62D 53/12

(54) **SATTELZUG MIT SATTELKUPPLUNG MIT FREMDKRAFTBETÄTIGTEM VERSCHLUSS**

(30) Priorität: 15.06.2023 DE 202023103325 U
(71) Anmelder: JOST-Werke Deutschland GmbH, 63263 Neu-Isenburg (DE)
(72) Erfinder: STRÜTT, Achim, 64560 Riedstadt (DE)
(74) Vertreter: WSL Patentanwälte Partnerschaft mbB

(57) **Zusammenfassung**

Die vorliegende Erfindung betrifft einen Sattelzug mit einem Zugfahrzeug (10) und einem Auflieger (12) mit einem Königszapfen, wobei das Zugfahrzeug (10) eine Sattelkupplung (14) aufweist, wobei die Sattelkupplung (14) eine Sattelkupplungsplatte (15), einen Verschluss für den Königszapfen, eine Betätigungsmechanik zum Betätigen des Verschlusses und eine an der Betätigungsmechanik angreifenden Zylinder-Kolbenanordnung (16) zum Bewegen der Betätigungsmechanik aufweist, wobei das Zugfahrzeug (10) eine Druckluft-Versorgungsleitung (18) aufweist, wobei die Zylinder-Kolbenanordnung (16) mittels einer Schnellkupplung unmittelbar an die Druckluft-Versorgungsleitung (18) des Zugfahrzeugs (10) anschließbar ist, wobei die Schnellkupplung durch ein erstes und ein kompatibles zweites Kupplungselement gebildet wird, wobei der Auflieger (12) eine Bremsanlage und ein Druckluftsystem zur Versorgung der Bremsanlage aufweist, wobei der Zylinder-Kolbenanordnung (16) und dem Druckluftsystem des Aufliegers (12) das baugleiche erste Kupplungselement (22, 24) zugeordnet ist, und der Druckluft-Versorgungsleitung (18) das kompatible zweite Kupplungselement (20) zugeordnet ist.

## Beschreibung

Die Erfindung betrifft einen Sattelzug mit einem Zugfahrzeug und einem Auflieger mit einem Königszapfen, wobei das Zugfahrzeug (10) eine Sattelkupplung (14) aufweist, wobei die Sattelkupplung eine Sattelkupplungsplatte, einen Verschluss für den Königszapfen, einer Betätigungsmechanik zum Betätigen des Verschlusses und eine an der Betätigungsmechanik angreifenden Zylinder-Kolbenanordnung zum Bewegen der Betätigungsmechanik aufweist, wobei das Zugfahrzeug eine Druckluft-Versorgungsleitung aufweist und wobei die Zylinder-Kolbenanordnung mittels einer Schnellkupplung unmittelbar an die Druckluft-Versorgungsleitung des Zugfahrzeugs anschließbar ist.

Sattelkupplungsplatten weisen bekanntermaßen eine Einfahröffnung auf, in die ein Königszapfen eines Aufliegers eingeführt und in seiner Endposition verriegelt werden kann, um eine mechanische Verbindung zum Ziehen des Aufliegers zu bilden. Zum Verriegeln ist in einer bekannten Ausführungsform der Sattelkupplung unter der Sattelkupplungsplatte unter anderem ein um einen Lagerbolzen schwenkbar gelagerter Verschlusshaken angeordnet, der bei Einkuppeln vom Königszapfen gegen die Kraft einer Zugfeder um den Lagerbolzen in die Einfahröffnung geschwenkt wird. Ferner ist unter Sattelkupplungsplatte ein im Wesentlichen translatorisch verschiebbarer Verschlussriegel angeordnet, der anschließend in seiner verriegelten Stellung den Verschlusshaken gegen eine Drehung zurück sichert, somit verschlossen hält und den Königszapfen arretiert. In der geöffneten Stellung des Verschlussriegels gibt dieser den Verschlusshaken frei, der beim Auskuppeln des Königszapfens um den Lagerbolzen schwenkt und die Einfahröffnung freigibt. Bei dieser Ausführungsform bilden der Verschlusshaken und der Verschlussriegel gemeinsam den "Verschluss" im Sinne der Erfindungsbeschreibung.

Ferner sind beispielsweise aus den Schriften DE 94 01 718 U1 und CH 675 989 A5 Ausführungsformen bekannt, bei denen der Verschlussriegel mittels eines daran angelenkten einseitigen Hebels verschoben wird. An dem freien Ende des Hebels ist ein Zugelement angelenkt, über welches ein Drehmoment in den Hebel eingeleitet wird. Bei dieser Ausführungsform bilden der Hebel und das Zugelement gemeinsam die "Betätigungsmechanik" im Sinne der Erfindungsbeschreibung. Die Zylinder-Kolbenanordnung kann hierbei entweder an dem Zugelement oder unmittelbar an dem Hebel angreifen, um den Verschlussriegel zu verschieben. Die Zylinder-Kolbenanordnung wirkt dabei in Richtung der geöffneten Stellung des Verschlussriegels, so dass ein Öffnen des Verschlusses nur unter Druck stattfindet. Ist die drucklos, so ist die Kupplung zwischen Königszapfen und Sattelkupplung sicher verschlossen und ein versehentliches Auskuppeln ist ausgeschlossen.

Die Schrift EP 1 162 090 B1 befasst sich mit einer Druckfluidsteuerung für eine solche Zylinderkolbenanordnung, wobei die Druckfluid-Zuführleitung ständig an eine Druckfluidquelle angeschlossen ist und ein Sperrventil aufweist, das unter dem Einfluss eines Steuermediums zwischen einer Durchlassstellungstellung und einer Sperrstellung verstellbar ist.

Die Betätigungsmechanik im Sinne der Erfindung ist nicht auf eine solche Ausführungsform mit Zugelement und Hebel beschränkt. Auch ist der Verschluss nicht auf die vorstehend beschriebene Ausführungsform mit Verschlusshaken und Verschlussriegel beschränkt.

Der mittels einer Zylinder-Kolbenanordnung zu öffnende Verschluss wird hierin auch als "fremdkraftbetätigter Verschluss" bezeichnet. Üblicherweise weist die Betätigungsmechanik ferner Mittel zur manuellen Handhabung auf. Diese sind bekanntermaßen regelmäßig als ein an dem Zugelement angeordneter Handgriff ausgebildet, welcher es erlaubt, die Betätigungsmechanik bzw. das Zugelement manuell zu bewegen und so auch den Verschluss bzw. den Verschlussriegel durch eine Zugbewegung gegen eine Federkraft von einer verriegelten Stellung in eine geöffnete Stellung derselben zu bringen. Die manuelle Handhabung steht bei Vorhandensein einer Zylinder-Kolbenanordnung als redundante Betätigungsmöglichkeit zur Verfügung, wenn letztere beispielsweise ausfallen sollte.

Bekanntermaßen ist die Zylinder-Kolbenanordnung an die Druckluftversorgung des Zugfahrzeugs angeschlossen. Die Druckluftversorgung wird mittels einer beispielsweise elektromagnetisch betätigbaren Ventilanordnung von einem Bediener zum Beispiel aus der Fahrerkabine des Zugfahrzeugs heraus gesteuert. Aus Sicherheitsgründen sind hohe Anforderungen an die verwendeten Komponenten zu stellen, um Fehlfunktionen zu vermeiden. Einige Komponenten müssen zur Sicherstellung deren Funktion doppelt ausgeführt werden. Dies betrifft vor allem die Ventile, um bei Leckagen oder Fehlfunktionen eines Ventils ein unbeabsichtigtes Öffnen des Verschlusses mit möglichst hoher Sicherheit zu vermeiden. Des Weiteren muss die Betätigungseinheit für die Ventile gegen eine versehentliche, falsche oder unbefugte Bedienung gesichert werden. Die Sicherheitsvorkehrungen eines solchen fremdkraftbetätigten Verschlusses erhöhen daher die Kosten der Sattelkupplung signifikant.

Es ist daher Aufgabe der vorliegenden Erfindung, eine Sattelkupplung für einen Sattelzug mit kostengünstigem fremdkraftbetätigtem Verschluss bereitzustellen.

Die Aufgabe wird bei einem Sattelzug mit einem Zugfahrzeug und einem Auflieger der eingangs genannten Art dadurch gelöst, dass die Schnellkupplung durch ein erstes und ein kompatibles zweites Kupplungselement gebildet wird, wobei der Auflieger eine Bremsanlage und ein Druckluftsystem zur Versorgung der Bremsanlage aufweist, wobei der Zylinder-Kolbenanordnung und dem Druckluftsystem des Aufliegers das baugleiche erste Kupplungselement zugeordnet ist, und der Druckluft-Versorgungsleitung das kompatible zweite Kupplungselement zugeordnet ist. Auf diese Weise kann die Druckluft-Versorgungsleitung wahlweise im Fahrbetrieb mit dem Druckluftsystem des Aufliegers oder im Koppelbetrieb mit der Zylinder-Kolben-Anordnung der Sattelkupplung verbunden werden.

Unter einer Schnellkupplung wird hierin eine Medienleitungs-Kupplung bestehend aus einem ersten und einem kompatiblen zweiten Kupplungselement verstanden. Die ersten und zweiten Kupplungselemente bilden ein Kupplungspaar und können beispielsweise durch Stecker, Steckerbuchsen, Kupplungsköpfe, Muffen oder Steckverbinder gebildet sein. Unter Schnellkupplung wird mithin jede wiederholbar und ohne Werkzeugeinsatz trenn- und fügbare Verbindung zwischen zwei Medienleitungen verstanden.

"Unmittelbar" heißt in diesem Zusammenhang ohne Zwischenschaltung von Ventilen. Die Schnellkupplung ersetzt also funktional die Ventilanordnung. Werden beispielsweise Stecker und Steckerbuchse manuell ineinandergesteckt, wird die Zylinder-Kolbenanordnung mit Druckluft beaufschlagt. Hierdurch ist auf einfache Weise eine versehentliche Bedienung ausgeschlossen.

Die Erfindung nutzt vorteilhafter Weise, dass das Zugfahrzeug bereits mit einer Druckluft-Versorgungsleitung, beispielsweise einem Druckluftschlauch, zur Verbindung mit dem Druckluftsystem des Aufliegers, beispielsweise zur Versorgung der Bremsanlage, versehen ist. Diese Verbindung wird in der Regel bereits über eine Schnellkupplung hergestellt. Da diese Verbindung im Stillstand des Sattelzugs (Zugfahrzeug mit Sattelauflieger) nicht benötigt wird, kann der Fahrer die Druckluft-Versorgungsleitung von dem Auflieger abziehen und mit der Zylinder-Kolbenanordnung verbinden. Deshalb ist es vorteilhaft, wenn bei einem Sattelzug das Kupplungselement der Schnellkupplung, welches der Zylinder-Kolbenanordnung zugeordnet ist, baugleich mit dem Kupplungselement ist, welches mit dem Druckluftsystem des Aufliegers verbunden ist. Das manuelle Umstecken stellt sicher, dass der Verschluss nur im Stand des Sattelzugs geöffnet werden kann, sodass ein versehentliches Öffnen des Verschlusses während der Fahrt durch eine versehentliche oder falsche Bedienung nicht möglich erscheint. Auch eine unbefugte Bedienung wird dadurch wesentlich erschwert.

Ein weiterer Vorteil dieses Vorgehens besteht darin, dass der Auflieger durch das Trennen von der Druckluft-Versorgungsleitung des Zugfahrzeugs automatisch eingebremst wird und während des Kuppelns nicht wegrollen kann. Im Regelfall verfügen die Auflieger nämlich über Federspeichersysteme, die erst durch die Druckbeaufschlagung gegen diese Federkraft geöffnet und offengehalten werden.

Besonders bevorzugt weist die Sattelkupplung das erste Kupplungselement der Schnellkupplung auf, welches durch ein Leitungsstück mit der Zylinder-Kolbenanordnung ohne Zwischenschaltung von Ventilen pneumatisch verbunden ist. Das erste Kupplungselement ist wahlweise ein Stecker oder eine Steckerbuchse, ein sogenannter Kupplungskopf, eine Muffe, ein Steckverbinder oder dergleichen. Das kompatible zweite Kupplungselement, also die dazu passende Steckerbuchse, der dazu passende Stecker, Kupplungskopf, Steckverbinder, Muffe oder dergleichen, ist der Druckluft-Versorgungsleitung des Zugfahrzeugs zugeordnet.

Das Leitungsstück ermöglicht es, das der Sattelkupplung zugeordnete erste Kupplungselement an einer frei wählbaren Stelle des Zugfahrzeugs zu positionieren. Das Leitungsstück kann zusammen mit dem ersten Kupplungselement auch unmittelbar in oder an einem Gehäuse der Zylinder-Kolben-Anordnung angeordnet sein.

Vorteilhafter Weise ist das erste Kupplungselement unmittelbar an der Sattelkupplung oder unmittelbar oder mittelbar an einem Rahmenteil des Zugfahrzeugs, vorzugsweise in der Nähe der Sattelkupplung, befestigt.

Erstere Positionierung erlaubt eine kompakte Anordnung und benötigt ein nur kurzes Leitungsstück. Gleichzeitig ist die Zuordnung des ersten Kupplungselement zu dem Verschluss eindeutiger. Zweitere Positionierung erlaubt es, einen leichteren Zugang für den Bediener zu schaffen. Als mittelbare Befestigung an einem Rahmenteil des Zugfahrzeugs kann beispielsweise ein Halteblech oder ein Hilfsrahmen vorgesehen sein.

Weiterhin bevorzugt umfasst die Sattelkupplung einen Verschlusssensor, der eingerichtet ist, bei ordnungsgemäß geschlossenem Verschluss ein Verschlusssignal auszugeben.

Wie bereits erwähnt, kann die Druckluft-Versorgungsleitung, welche bevorzugt ferner einen Spiralschlauch aufweist, einerseits mit dem Druckluftsystem des Aufliegers, beispielsweise zur Versorgung der Bremsanlage im Fahrbetrieb, oder andererseits mit der Zylinder-Kolben-Anordnung der Sattelkupplung zum Öffnen des Verschlusses im Koppelbetrieb verbunden werden. Auf diese Weise ist es nicht möglich im Fahrbetrieb den Verschluss versehentlich zu öffnen. Umfasst die Sattelkupplung einen Verschlusssensor, dann weist das Zugfahrzeug zudem vorteilhafter Weise eine Anzeigeeinrichtung auf, die mit dem Verschlusssensor drahtgebunden oder drahtlos verbunden oder verbindbar und eingerichtet ist, das Verschlusssignal zur Anzeige zu bringen.

Weitere Details der Erfindung werden nachfolgend anhand von Figuren näher erläutert. Es zeigen:
- Figur 1: eine Sattelzuganordnung in fahrbereitem Zustand;
- Figur 2: eine Sattelzuganordnung mit umgestecktem Druckluftanschluss zum Öffnen des Verschlusses;
- Figur 3: eine Sattelzuganordnung bereit zum Abkoppeln;
- Figur 4: eine Sattelzuganordnung mit abgekoppeltem Zugfahrzeug und

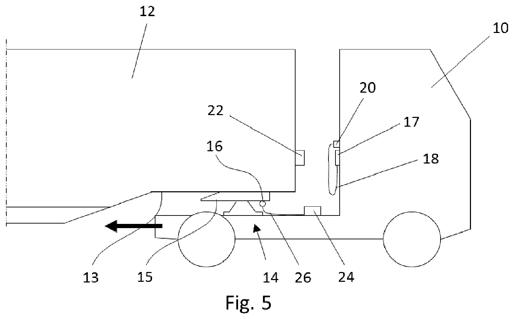

- Figur 5: eine Sattelzuganordnung mit wieder angekuppeltem Zugfahrzeug.

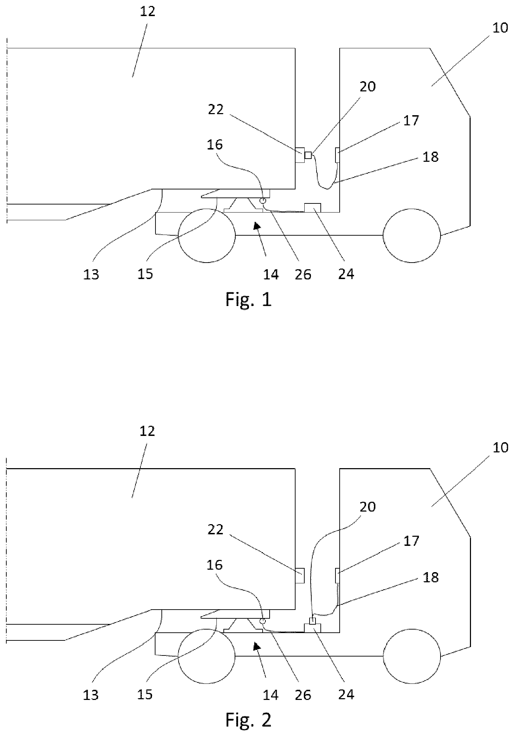

Der Sattelzug besteht aus einem Zugfahrzeug 10 und einem Auflieger 12. In der Figur 1 sind das Zugfahrzeug 10 der Auflieger 12 fahrbereit miteinander gekoppelt. Der Auflieger liegt mit seiner Bodenplatte 13 auf der Sattelkupplung 14 des Zugfahrzeugs 10 auf, wobei der Königszapfen (nicht gezeigt) in der Endposition der Einfahröffnung der Sattelkupplungsplatte verriegelt ist. Die Verriegelung erfolgt pneumatisch mittels einer Zylinderkolbenanordnung 16, welche unterhalb der Sattelkupplungsplatte 15 angeordnet ist.

Das Zugfahrzeug 10 weist eine Druckluftversorgung auf, an welche über einen ausgangsseitigen Druckluftanschluss 16 auf der Rückseite der Fahrerkabine eine Druckluft-Versorgungsleitung 18 angeschlossen ist. Solche Druckluft-Versorgungsleitungen weisen gewöhnlich einen Spiralschlauch auf. Am freien Ende der Druckluft-Versorgungsleitung 18 ist ein zweites Kupplungselement 20 beispielsweise in Form eines Steckers, einer Steckerbuchsen, eines Kupplungskopfes, einer Muffe oder eines Steckverbinders angeordnet, welches in dem hier gezeigten fahrbereiten Zustand des Sattelzuges mit dem dazu kompatiblen ersten Kupplungselement 22 des Aufliegers 12 verbunden ist. Das erste Kupplungselement 22 des Aufliegers ist wiederum mit dem Druckluftsystem zur Versorgung der Bremsanlage des Aufliegers 12 verbunden. Auf diese Weise wird die Bremsanlage des Aufliegers 12 mittels Druckluftsteuerung in dem Zugfahrzeug 10 im Fahrbetrieb betätigt.

Soll das Zugfahrzeug 10 von dem Auflieger 12 abgekoppelt werden, wird zuvor die Verbindung zwischen dem zweiten Kupplungselement 20 der Druckluft-Versorgungsleitung 18 und dem ersten Kupplungselement 22 des Aufliegers 12 manuell getrennt und das zweite Kupplungselement 20 der Druckluft-Versorgungsleitung 18 anschließend mit einem ersten Kupplungselement 24 der Sattelkupplung 14, welches beispielsweise an einen Rahmenteil des Zugfahrzeugs 10 befestigt ist, manuell verbunden. Durch das Trennen von der Druckluft-Versorgungsleitung 18 wird der Auflieger automatisch eingebremst und kann während des gesamten Abkoppelns nicht wegrollen. Das erste Kupplungselement 24 der Sattelkupplung 14 und das erste Kupplungselement 22 des Aufliegers 12 sind baugleich, sodass für die wahlweise Verbindung mit dem Auflieger 12 und dem Verschluss der Sattelkupplung 14 kein separater Verbindungsschlauch mit einem anderen Kupplungselement zu der Druckluftversorgung des Zugfahrzeugs 10 zur Verfügung gestellt werden muss.

Das erste Kupplungselement 24 an dem Zugfahrzeug 10 ist mittels eines Leitungsstücks 26 mit der Zylinderkolbenanordnung 16 fest verbunden. Zwischen dem ausgangsseitigen Druckluftanschluss 17 am Zugfahrzeug 10 und der Zylinderkolbenanordnung 16 an der Sattelkupplung 14 befindet sich also kein schaltbares Ventil. Die Unterbrechung der Druckluftversorgung wird allein durch Abziehen des zweiten Kupplungselements 20 von dem ersten Kupplungselement 24 realisiert. In dem in Figur 2 gezeigten Zustand ist also die Zylinderkolbenanordnung 16 mit Druckluft beaufschlagt, wodurch sie mittels der Betätigungsmechanik den Verschluss für den Königszapfen öffnet. Der Sattelzug ist hiermit bereit, abgekoppelt zu werden.

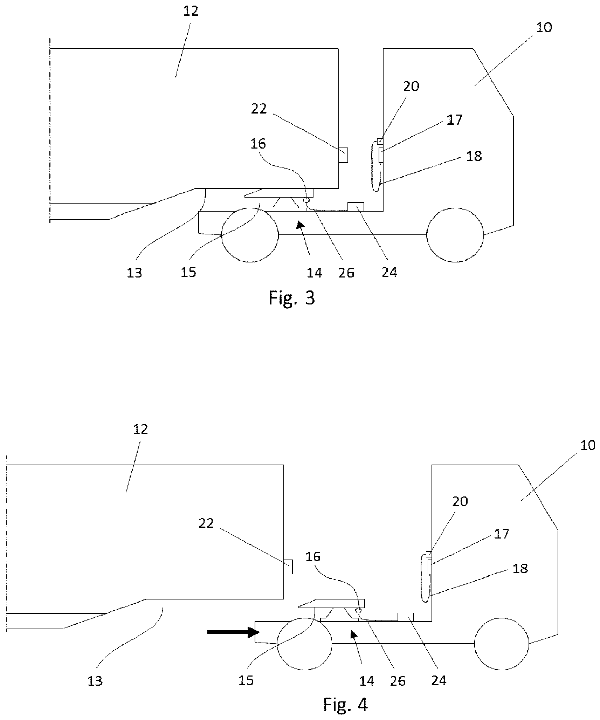

Bevor das Zugfahrzeug 10 vom Auflieger 12 wegfährt, kann das zweite Kupplungselement 20 an der Druckluft-Versorgungsleitung 18 zunächst noch von dem ersten Kupplungselement 24 der Sattelkupplung 14 abgezogen werden, da der Verschluss aus Sicherheitsgründen unmittelbar nach dem Öffnen auch dann geöffnet bleibt, wenn die Zylinderkolbenanordnung 16 drucklos ist. Der Verschluss befindet sich dann in der sogenannten Bereitschaftsstellung, in der die Betätigungsmechanik mechanisch gehalten wird. Das zweite Kupplungselement 20 ist hier in seiner Parkposition unmittelbar an der Rückseite der Kabine des Zugfahrzeugs 10 gezeigt, wo er mittels eines geeigneten Halters fixiert und die Druckluft-Versorgungsleitung 18 sicher verstaut ist. Nach diesen Vorbereitungen kann das Zugfahrzeug 10 von dem Anlieger 12 weggefahren werden. Dieser Vorgang ist in Figur 4 illustriert.

Zum erneuten Ankoppeln ist nichts weiter erforderlich, als das Zugfahrzeug 10 wieder an den Auflieger 12 dergestalt heranzufahren, dass der Königszapfen in der Endposition in der Sattelkupplungsplatte zu liegen kommt, wodurch sich der Verschluss (nicht gezeigt) mittels Federkraft verschließt und den Königszapfen mechanisch sicher verriegelt. Um den Sattelzug hiernach wieder fahrbereit zu machen, wird das zweite Kupplungselement 20 an der Druckluft-Versorgungsleitung 18 wieder mit dem ersten Kupplungselement 22 des Aufliegers 12 verbunden, womit der Ausgangszustand der Figur 1 wieder erreicht ist.

Alternativ zu der in Figur 4 dargestellten Variante, kann der Verschluss während des Wegfahrens auch, wie in Figur 2 gezeigt, druckbeaufschlagt belassen werden. Auch dann muss allerdings das zweite Kupplungselement 20 an der Druckluft-Versorgungsleitung 18 spätestens beim erneuten Ankoppeln des Aufliegers 12 von dem ersten Kupplungselement 24 getrennt werden, damit sich der Verschluss verschließen kann.

Im Folgenden werden die einzelnen Schritte des Ab- und Ankuppelns noch einmal zusammenfassend beschrieben:
- Schritt 1:: Abziehen des ersten Kupplungselements 20 von dem zweiten Kupplungselement 22 des Aufliegers 12 und Einstecken bzw. Verbinden des ersten Kupplungselements 20 in die bzw. mit dem zweiten Kupplungselement 24 der Sattelkupplung 14 - der Verschluss der Sattelkupplung 14 öffnet sich;
- Schritt 2:: Abziehen des ersten Kupplungselements 20 von dem zweiten Kupplungselement 24 der Sattelkupplung 14 und Parken des ersten Kupplungselements 20 in seiner Parkposition - das Zugfahrzeug 10 kann wegfahren und
- Schritt 3:: Verbinden des ersten Kupplungselements 20 mit dem zweiten Kupplungselement 22 des Aufliegers 12 nach dem erneuten Ankoppeln des Zugfahrzeugs 10.

Diese Schritte 1 bis 3 erfolgen manuell, sodass keine sicherheitsrelevante Ventilsteuerung benötigt wird. Die Vorgänge sind deshalb bedienerfreundlich und zugleich kostengünstig zu realisieren.

### BEZUGSZEICHENLISTE

- 10: Zugfahrzeug
- 12: Auflieger
- 13: Bodenplatte
- 14: Sattelkupplung
- 15: Sattelkupplungsplatte
- 16: Zylinder-Kolbenanordnung
- 17: Druckluftanschluss
- 18: Druckluft-Versorgungsleitung
- 20: zweites Kupplungselement
- 22: erstes Kupplungselement des Aufliegers
- 24: erstes Kupplungselement der Sattelkupplung
- 26: Leitungsstück

## Patentansprüche

1. Sattelzug mit einem Zugfahrzeug (10) und einem Auflieger (12) mit einem Königszapfen, wobei das Zugfahrzeug (10) eine Sattelkupplung (14) aufweist, wobei die Sattelkupplung (14) eine Sattelkupplungsplatte (15), einen Verschluss für den Königszapfen, eine Betätigungsmechanik zum Betätigen des Verschlusses und eine an der Betätigungsmechanik angreifenden Zylinder-Kolbenanordnung (16) zum Bewegen der Betätigungsmechanik aufweist,
wobei das Zugfahrzeug (10) eine Druckluft-Versorgungsleitung (18) aufweist, wobei die Zylinder-Kolbenanordnung (16) mittels einer Schnellkupplung unmittelbar an die Druckluft-Versorgungsleitung (18) des Zugfahrzeugs (10) anschließbar ist,
wobei die Schnellkupplung durch ein erstes und ein kompatibles zweites Kupplungselement gebildet wird,
wobei der Auflieger (12) eine Bremsanlage und ein Druckluftsystem zur Versorgung der Bremsanlage aufweist,
wobei der Zylinder-Kolbenanordnung (16) und dem Druckluftsystem des Aufliegers (12) das baugleiche erste Kupplungselement (22, 24) zugeordnet ist, und der Druckluft-Versorgungsleitung (18) das kompatible zweite Kupplungselement (20) zugeordnet ist.

2. Sattelzug nach Anspruch 1, **dadurch gekennzeichnet,**
**dass** die Sattelkupplung (14) das erste Kupplungselement (24) der Schnellkupplung aufweist, welches durch ein Leitungsstück (26) mit der Zylinder-Kolbenanordnung (16) ohne Zwischenschaltung von Ventilen pneumatisch verbunden ist.

3. Sattelzug nach Anspruch 2, **dadurch gekennzeichnet,**
**dass** das erste Kupplungselement (24) unmittelbar an der Sattelkupplung (14) oder unmittelbar oder mittelbar an einem Rahmenteil des Zugfahrzeugs (10), vorzugsweise in der Nähe der Sattelkupplung (14), befestigt ist.

4. Sattelzug nach einem der vorstehenden Ansprüche, **dadurch gekennzeichnet,**
**dass** die Sattelkupplung (14) einen Verschlusssensor umfasst, der eingerichtet ist, bei ordnungsgemäß geschlossenem Verschluss ein Signal auszugeben.

5. Sattelzug nach Anspruch 4, **dadurch gekennzeichnet,**
**dass** das Zugfahrzeug (10) eine Anzeigeeinrichtung umfasst, die mit dem Verschlusssensor drahtgebunden oder drahtlos verbunden oder verbindbar und eingerichtet ist, das Signal zur Anzeige zu bringen
